# EUROPÄISCHE PATENTSCHRIFT

(11) **EP 3 223 410 B1**
(45) Veröffentlichungstag und Bekanntmachung des Hinweises auf die Patenterteilung: **03.10.2018**
(21) Anmeldenummer: 17000390.9
(22) Anmeldetag: 10.03.2017
(51) Int. Cl.: H02K 15/085

(54) **VERFAHREN ZUM BEWICKELN EINES WICKLUNGSTRÄGERS**
METHOD FOR WINDING A WINDING SUPPORT
PROCÉDÉ D'ENROULEMENT D'UN SUPPORT D'ENROULEMENT

(30) Priorität: 26.03.2016 DE 102016003802
(43) Veröffentlichungstag der Anmeldung: 27.09.2017
(73) Patentinhaber: Audi AG, 85045 Ingolstadt (DE)
(72) Erfinder: Richnow, Jan, DE - 85049 Ingolstadt (DE); Gräf, Rolf, DE - 85055 Ingolstadt (DE); Stenzel, Peer, DE - 85051 Ingolstadt (DE); Westermaier, Christian, DE - 85229 Markt Indersdorf (DE)
(74) Vertreter: Eickmeyer, Dietmar

(56) Entgegenhaltungen:
- DE-A1- 10 056 794
- DE-A1-102006 035 699
- DE-A1-102010 003 328
- GB-A- 1 149 264

## Beschreibung

Die Erfindung betrifft ein Verfahren zum Bewickeln eines Wicklungsträgers, insbesondere eines Stators einer Elektromaschine, nach dem Oberbegriff des Patentanspruches 1. Unter einer Elektromaschine im Sinne der Erfindung ist generell jegliche Art von Elektromotor, Generator oder dergleichen zu verstehen.

Der Stator einer Elektromaschine wird in gängiger Praxis in der sogenannten Einziehtechnologie bewickelt. Dabei werden lose Kupferspulen mit einem Schablonenwickler erzeugt und dann halbautomatisch oder vollautomatisch mit Hilfe eines Einziehwerkzeuges in die Längsnuten des Stators eingezogen. Nachteilig bei diesem Verfahren sind die erforderlichen weiteren Prozessschritte, nämlich das manuelle Anbringen der Phasenisolierung, das Verschalten, das Zwischen- und Endformen sowie das Bandagieren. Beim Verschalten, das heißt beim manuellen Verlegen der Drähte werden Spulenenden nach einem vorgegebenen Verschaltungsschema miteinander verbunden, und zwar beispielhaft unter Bildung dreier Phasen sowie zumindest eines Sternpunktes.

Wie oben erwähnt, erfolgt nach dem Wickel- oder Einziehprozess das manuelle Verschalten, bei dem die Drahtbündel der Spulenenden zu den drei Phasen zusammengefasst werden. Anschließend werden im Stand der Technik manuell Kabelschuhe auf die Spulenenden aufgesetzt und werden diese auf einer Vorrichtung abgelegt, um die Spulenenden zum Beispiel in einem Heißcrimpverfahren zu verbinden.

Neben der obigen Einziehtechnologie ist auch die Nadelwickeltechnik bekannt, bei der ein definiertes Ablegen von Wickeldrähten erfolgt. Mit diesem Verfahren ist es, im Unterschied zur Einziehtechnik, möglich, die Wickeldrähte direkt an definierter Stelle abzulegen. In einem solchen gattungsgemäßen Nadelwickelverfahren wird ein Wickeldraht unter Drahtspannung aus einer Wickelnadel geführt und nach einem vordefinierten Wickelschema im Wicklungsträger (das heißt zum Beispiel im Stator einer Elektromaschine) abgelegt. Der Stator kann im bewickelten Zustand je Phase zumindest zwei in Umfangsrichtung zueinander versetzte Spulengruppen aufweisen, von denen jede Spulengruppe zum Beispiel zwei seriell hintereinander geschaltete Spulen aufweist. Ein derartiges Nadelwickelverfahren ist grundsätzlich aus der DE 10 2011 008 662 A1 und aus der DE 10 2014 009 799 A1 bekannt.

Die Spulenenden der Spulengruppen werden in einem nach dem Wickelprozess erfolgenden Verschaltungsprozess nach einem vorgegebenen Verschaltungsschema miteinander elektrisch verbunden, und zwar beispielhaft unter Bildung der bereits erwähnten drei Phasen sowie des Sternpunktes.

Aus der DE 2010 003 328 A1 ist ein gattungsgemäßes Verfahren zum Bewickeln eines Wicklungsträgers bekannt, bei dem ein einziger Leiter kontinuierlich gewickelt wird. In einem Auftrennschritt wird der einzige, kontinuierlich gewickelte Leiter in mehrere Phasenwicklungen aufgetrennt. Aus der DE 10 2006 035 699 A1 ist ein weiteres Verfahren zur Herstellung einer Maschinenwicklung bekannt, bei der die Maschinenwicklung insgesamt durchgehen bzw. nicht unterbrochen durch Wickeln hergestellt wird. Aus der GB 1 149 264 A und aus der DE 100 56 794 A1 sind weitere Wickelverfahren bekannt.

Die Aufgabe der Erfindung besteht darin, ein Verfahren zum Bewickeln eines Wicklungsträgers bereitzustellen, bei dem unter Anwendung der Nadelwickeltechnik ein fertigungstechnisch einfaches Bewickeln durchführbar ist.

Die Aufgabe ist durch die Merkmale des Patentanspruches 1 gelöst. Bevorzugte Weiterbildungen der Erfindung sind in den abhängigen Ansprüchen offenbart.

Gemäß dem Patentanspruch 1 ist das Wickelschema so ausgelegt, dass die Spulengruppen einer jeden Phase ohne Drahtunterbrechung mit dem Wickeldraht kontinuierlich durchgewickelt werden können. Jeder Phase ist somit lediglich genau ein Wickeldraht zugeordnet. In einem Auftrennschritt am Wickelprozessende wird dann das Drahtbündel am jeweiligen Drahtübergang zwischen einem Spulenausgang einer in der Umfangsrichtung vorgelagerten Spulengruppe und einem Spuleneingang einer benachbarten, in der Umfangsrichtung nachgelagerten Spulengruppe unter Bildung der Spulenenden aufgetrennt. Die im Auftrennschritt gebildeten Spulenenden werden in einem nachgeschalteten Verschaltungsprozess miteinander elektrisch verbunden.

Nachfolgend werden die Wickelschritte des Wickelschemas beschrieben: So wird zunächst zu einem Wickelprozessbeginn der Wickeldraht an einer Anbindungsstelle fixiert und in einem ersten Wickelschritt unter Bildung von Spulenwindungen in den Längsnuten des Wicklungsträgers abgelegt, die der ersten Spulengruppe der jeweiligen Phase zugeordnet sind. Anschließend wird in einem zweiten Wickelschritt der Wickeldraht aus dem Spulenausgang der ersten Spulengruppe geführt und ohne Drahtunterbrechung unter Bildung von Spulenwindungen in den Längsnuten abgelegt, die der zweiten Spulengruppe zugeordnet sind.

Im Falle von mehr als zwei Spulengruppen in jeder Phase ist dem obigen zweiten Prozessschritt zumindest ein weiterer Wickelschritt nachgeschaltet, bei dem der Wickeldraht aus dem Spulenausgang der zweiten Spulengruppe geführt wird und ohne Drahtunterbrechung unter Bildung von Spulenwindungen in der zumindest einen, folgenden Spulengruppe abgelegt wird. In einem anschließenden letzten Wickelschritt wird der Wickeldraht aus dem Spulenausgang der in der Umfangsrichtung letzten, zu bewickelnden Spulengruppe geführt und ohne Drahtunterbrechung in der, in Umfangsrichtung anschließenden ersten Spulengruppe erneut abgelegt, und zwar unter Bildung weiterer Spulenwindungen.

Die obigen ersten bis letzten Wickelschritte werden wiederholt, bis jede Spulengruppe der jeweiligen Phase eine vorgegebene Anzahl von Spulenwindungen aufweist.

In einer technischen Umsetzung des Wickelprozesses kann der obige Auftrennschritt erst nach der Fertigstellung sämtlicher Spulengruppen aller drei Phasen erfolgen.

Zur Ausführung des erfindungsgemäßen Wickelschemas sind Wickelpfosten vorgesehen, die mit einem Radialabstand radial außerhalb der Längsnuten des Wicklungsträgers angeordnet sind. Die Wickelpfosten sind bevorzugt in der Umfangsrichtung gleichmäßig umfangsverteilt angeordnet.

Zur Bildung eines der Drahtübergänge wird der Wickeldraht vom Spulenausgang einer in der Umfangsrichtung vorgelagerten Spulengruppe schlaufenartig nach außen um zumindest einen ersten Wickelpfosten geführt und anschließend radial nach innen zum Spuleneingang einer benachbarten, in der Umfangsrichtung nachgelagerten Spulengruppe rückgeführt wird. Die Schlaufenlänge des oben erwähnten schlaufenartigen Drahtübergangs wird erhöht, wenn der radial nach außen um den ersten Wickelpfosten geführte Wickeldraht in der Umfangsrichtung um zumindest einen zweiten Wickelpfosten geführt wird und anschließend vorbei am ersten Wickelpfosten zum Spuleneingang der benachbarten, in der Umfangsrichtung nachgelagerten Spulengruppe rückgeführt wird.

Wie oben erwähnt, werden sämtliche Spulengruppen mittels eines einzigen Wickeldrahtes durchgewickelt. Nach Fertigstellung sämtlicher Spulengruppen der jeweiligen Phase erfolgt ein Pressenschritt, bei dem die stirnseitigen Wickelköpfe der Spulengruppen gegen die Wicklungsträger-Stirnseite gepresst werden. Anschließend kann gegebenenfalls auf die gepressten Wickelköpfe eine Phasenisolation gelegt werden und kann in einem anschließenden Wickelprozess die Spulengruppen einer weiteren Phase gewickelt werden.

Nach der Fertigstellung der Spulengruppen können deren Längsnuten-Schlitze mit Hilfe eines speziellen Deckschieberwerkzeuges mit Deckschiebern geschlossen werden.

In einer technischen Umsetzung können die Wickelpfosten für jede Phase eine eigene Drahtführung aufweisen. Dadurch ist gewährleistet, dass die Wickeldrähte der jeweiligen Phasen voneinander separiert um die Wickelpfosten gewickelt werden können.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1a: in einer Prinzipskizze den grundsätzlichen Aufbau einer Elektromaschine;
- Fig. 1b: ein Blockschaltdiagramm zur Veranschaulichung der Prozessschritte zur Herstellung eines Stators der Elektromaschine;
- Fig. 2: in einer Seitenansicht einen Stator der Elektromaschine im unbewickelten Zustand;
- Fig. 3 bis 7: den Wickelprozess der Spulengruppen einer elektrischen Phase;
- Fig. 8: eine Ansicht entsprechend der Fig. 7 zur Veranschaulichung des Auftrennschrittes; und
- Fig. 9: eine Detailansicht eines Wickelpfostens.

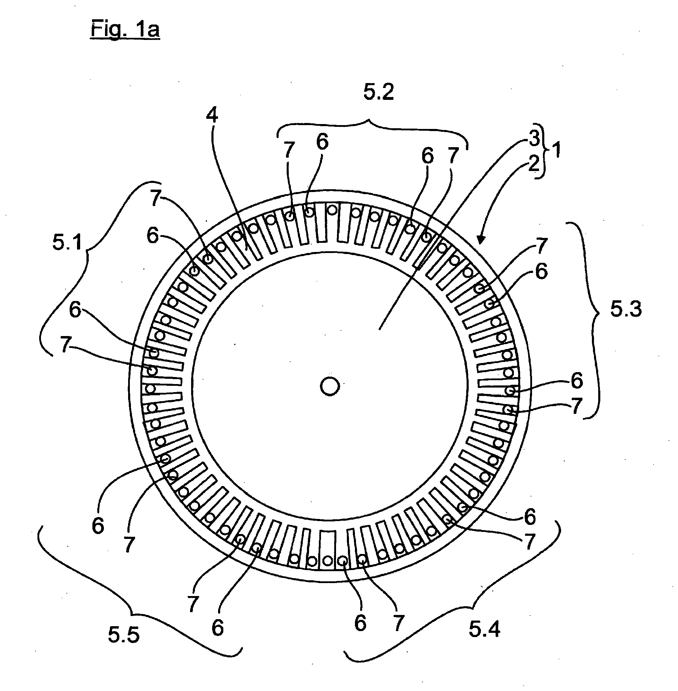

In der Fig. 1a ist schematisch ein Querschnitt durch eine einfache Drehstrom-Elektromaschine 1 angedeutet. Die Elektromaschine 1 weist einen zylindrischen Stator 2 und einen darin drehbar gelagerten Rotor 3 auf. Der Stator 2 weist nach innen gerichtete, in Umfangsrichtung winkelversetzte Längsnuten 4 auf, in denen phasenzugeordnete Spulengruppen 5.1 bis 5.5 in verteilten Wicklungen abgelegt sind, die mit einem nicht dargestellten Nadelwickelsystem hergestellt sind. In der Fig. 1a sind aus Gründen der Übersichtlichkeit lediglich die Spulengruppen 5.1 bis 5.5 einer der Phasen (nämlich der Phase u) gekennzeichnet und hervorgehoben. Die Spulengruppen der Phase v sowie die Spulengruppen der Phase w sind in Umfangsrichtung winkelversetzt zu den Spulengruppen 5.1 bis 5.5 der Phase u abgelegt und ansonsten identisch aufgebaut. Im Betrieb der Elektromaschine 1 werden die Spulengruppen des Stators 1 derart bestromt, dass ein drehendes Magnetfeld entsteht, das eine Kraftwirkung auf dem drehgelagerten Rotor 3 ausübt.

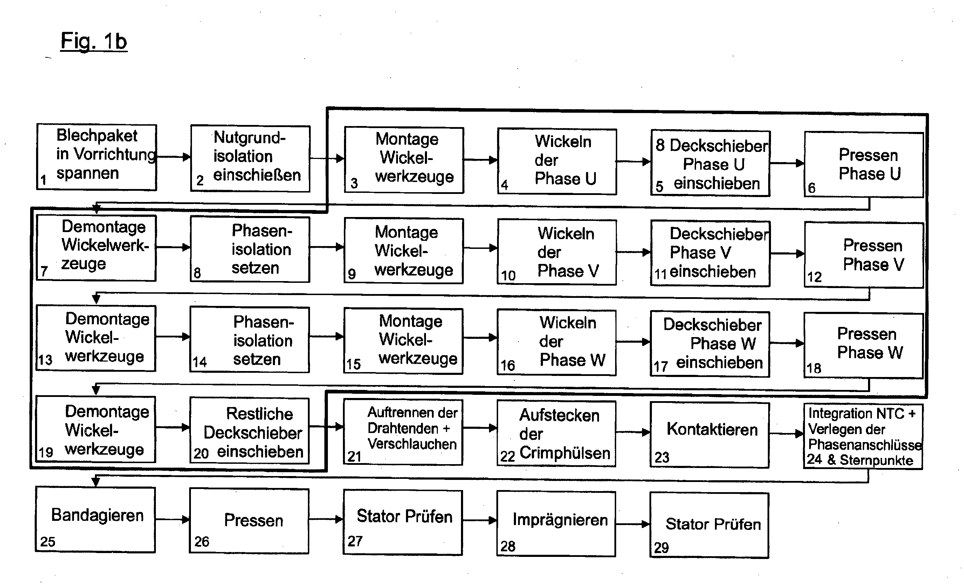

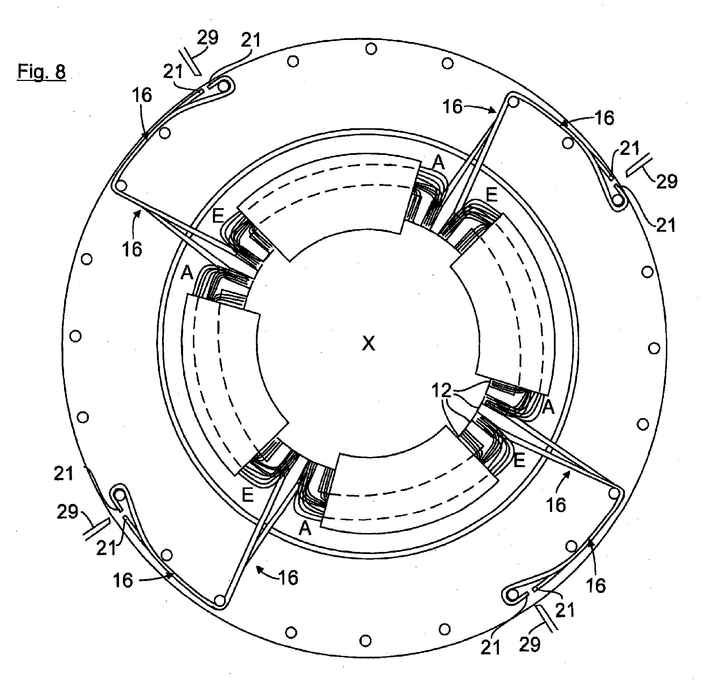

Wie aus der Fig. 1a weiter hervorgeht, ist jede der Spulengruppen 5.1 bis 5.5 der Phase u aus einer inneren Spule 6 und einer äußeren Spule 7 aufgebaut, die seriell hintereinander geschaltet sind und jeweils eine Anzahl von Längsnuten 4 umschließen. Jede der Spulengruppen 5.1 bis 5.5 der Phase u weist zwei in der Fig. 1 nicht gezeigte Spulenenden 21 (nur in der Fig. 8 ersichtlich) auf. Die Spulenenden 21 sämtlicher Spulengruppen sind nach einem vorgegebenen Verschaltungsschema miteinander elektrisch verbunden.

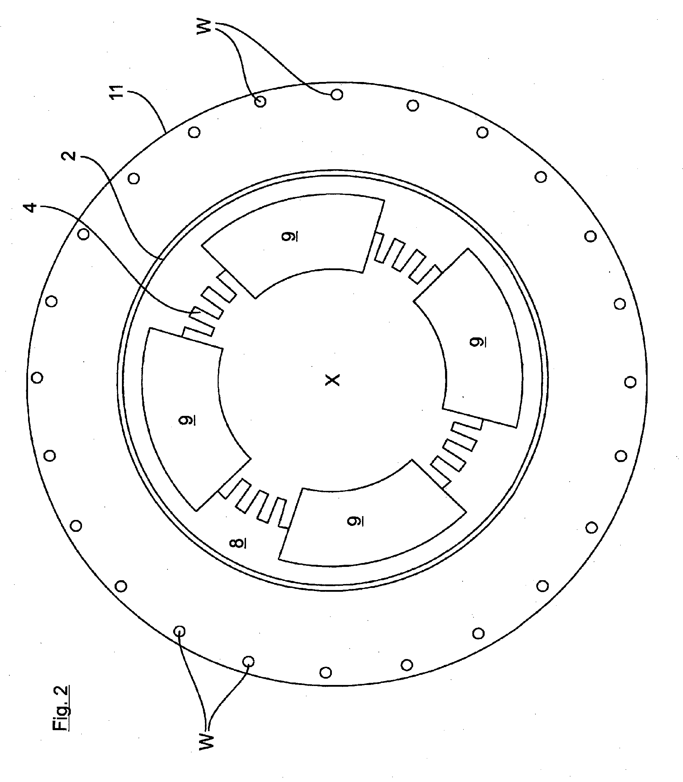

Anhand des in der Fig. 1b gezeigten Blockschaltdiagramms wird die Prozessabfolge zur Herstellung des in der Fig. 1a gezeigten Stators 3 beschrieben. In dieser Prozessabfolge ist ein Wickelprozess zum Wickeln der Phasen u, v, w integriert (d.h. die Prozessschritte 4, 10 und 16). Das im Wickelprozess angewendete Wickelschema wird später anhand der Fig. 2 bis 7 erläutert.

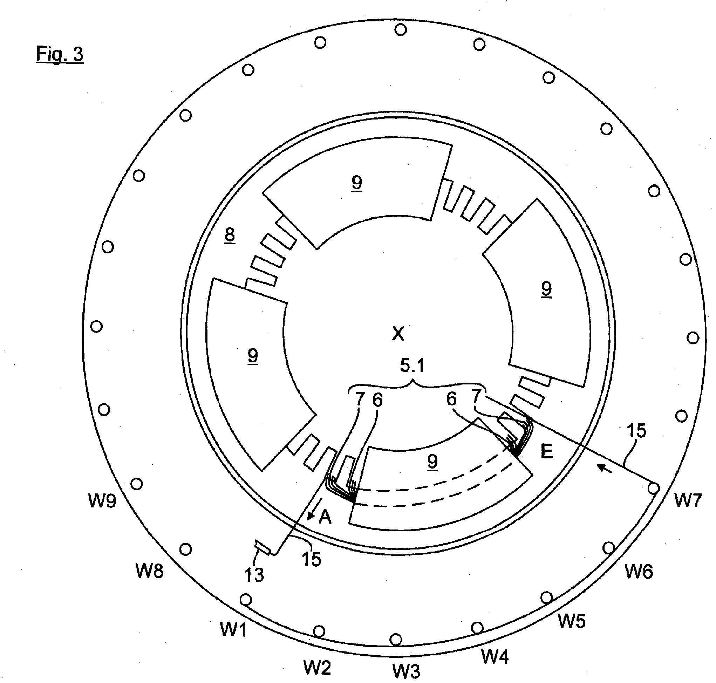

So wird in dem Blockschaltdiagramm der Fig. 1b zunächst der noch unbewickelte Stator 3 in eine Nadelwickelvorrichtung gespannt (Prozessschritt 1 in der Fig. 1b). In der Fig. 2 ist der Stator 2 noch in seinem unbewickelten Zustand gezeigt. Demzufolge weist der Stator 2 in der Fig. 1 (wie auch in den anderen Fig. 3 bis 8) zur Herstellung der Spulengruppen 5.1 bis 5.4 Wickelwerkzeuge 9 auf, deren Aufbau sowie Funktionsweise aus der DE 10 2014 009 799 A1 bekannt sind, auf deren Offenbarung explizit Bezug genommen wird. Wie aus der Fig. 2 hervorgeht, sind insgesamt vier Wickelwerkzeuge 9 an der gezeigten oberen Stirnseite 8 des Stators sowie an der gegenüberliegenden Stator-Stirnseite zueinander in axialer Flucht angeordnet. Die Wickelwerkzeuge 9 dienen während des Wickelprozesses als Schablonen, entlang derer der Wickeldraht 15 nach dem vorgegebenen Wickelschema abgelegt wird. Zudem ist in der Fig. 2 (wie auch in den Fig. 3 bis 8) ein radial außenseitig fest am Stator 2 montierter Montagering 11 vorgesehen, der umfangsseitig gleichmäßig verteilte Wickelpfosten W trägt, die für den Wickelprozess erforderlich sind.

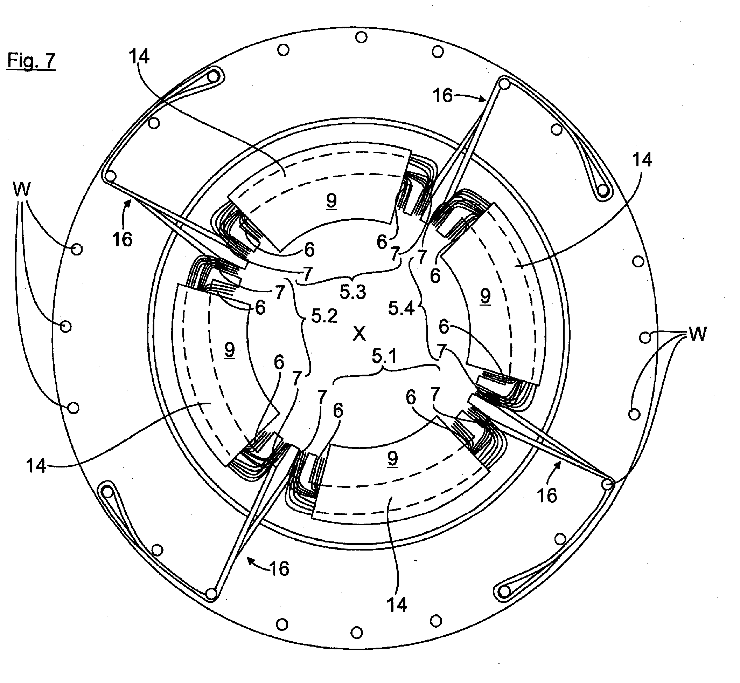

Im Prozessschritt 2 (Fig. 1b) wird eine Nutgrundisolation in die noch leeren Längsnuten 4 des unbewickelten Stators 2 eingeschossen. Danach werden die Wickelwerkzeuge 9 montiert und startet der in den Fig. 2 bis 7 gezeigte Wickelprozess der Phase u (Prozessschritt 4 in der Fig. 1b). Nach dem Wickelprozess werden Deckschieber 12 (in der Fig. 8 angedeutet) in die gefüllten Längsnuten 4 eingeschoben. Danach werden in einem Pressenschritt (Prozessschritt 6 in der Fig. 1b) die Wickelwerkzeuge 9 in Axialrichtung gegen die Stator-Stirnseite 8 gedrückt, um die Spulenköpfe 14 (Fig. 7) der Spulengruppen 5.1 bis 5.4 zu verpressen. Danach werden die Wickelwerkzeuge 9 demontiert und wird auf die Spulenköpfe 14 eine Phasenisolation gesetzt (Prozessschritt 8 in der Fig. 1b).

Die anschließenden Prozessschritte 9 bis 14 (Fig. 1b) betreffen die Erzeugung der Phase v und sind ansonsten identisch mit den Prozessschritten 3 bis 8. Die Prozessschritte 15 bis 20 betreffen die Erzeugung der Phase w und sind ansonsten identisch mit den Prozessschritten 3 bis 7. Nach dem Wickelprozess (Prozessschritte 3 bis 20 in der Fig. 1b) erfolgt ein Auftrennschritt (Prozessschritt 21), der später anhand der Fig. 8 erläutert wird. Anschließend erfolgen weitere Fertigungs- und Prüfschritte 22 bis 29 bis zur Fertigstellung des Stators 2.

Die in der Fig. 1b gezeigten Prozessschritte 2 bis 20, der Prozessschritt 23 sowie die Prozessschritte 25 bis 29 werden automatisiert durchgeführt, während die verbleibenden Prozessschritte manuell durchgeführt werden.

Nachfolgend wird anhand der Fig. 2 bis 7 das im Prozessschritt 4 (Fig. 1b) angewendete Wickelschema am Beispiel der Phase u beschrieben. Die Wickelschemata für die Phase v und für die Phase w sind in den Figuren aus Gründen der Übersichtlichkeit nicht gezeigt, jedoch identisch mit dem Wickelschema für die Phase u. Erfindungsgemäß ist das Wickelschema so ausgelegt, dass die Spulengruppen einer jeden Phase u, v und w ohne Drahtunterbrechung mit dem Wickeldraht 15 in der Stator-Umfangsrichtung durchgewickelt werden können. So wird zu einem Wickelprozessbeginn (Fig. 3) zunächst der Wickeldraht 15 an einem Wickelpfosten W1 zum Beispiel durch eine schraubenlinienförmigen Bewegung der Wickelnadel 13 um den Wickelpfosten W1 gewickelt und dort fixiert.

Anschließend wird in einem ersten Wickelschritt (Fig. 3) der Wickeldraht 15 in Umfangsrichtung radial außerhalb der Wickelpfosten W2 bis W6 bis zum Wickelpfosten W7 geführt und von dort radial nach innen zu den Längsnuten 4 geführt, die der ersten Spulengruppe 5.1 der Phase u zugeordnet sind. In den Längsnuten 4 wird der Wickeldraht 15 in Axialrichtung durch die Längsnuten 4 geführt und an der Stator-Unterseite entlang des nicht gezeigten Wickelwerkzeuges 9 wieder zur Stator-Oberseite 8 geführt, und zwar unter Bildung einer Anzahl von Spulenwindungen der ersten Spulengruppe 5.1.

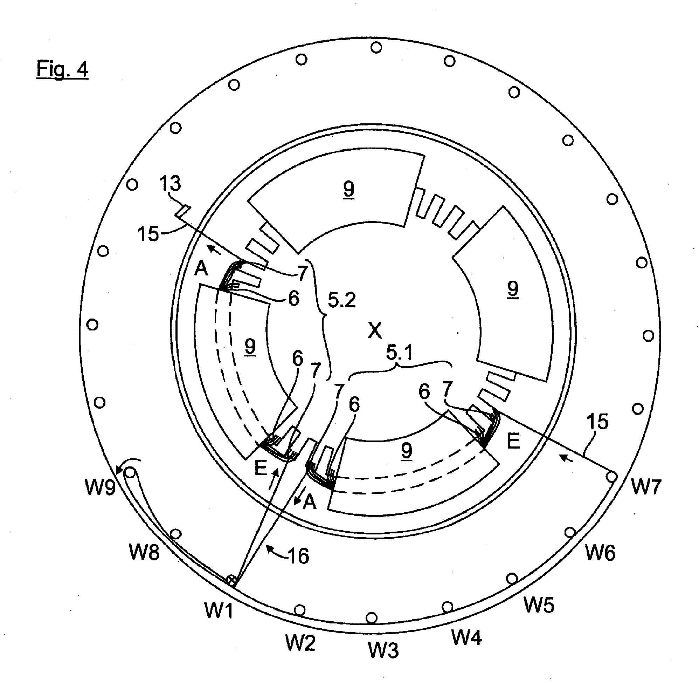

In einem folgenden zweiten Wickelschritt (Fig. 4) wird der Wickeldraht 15 vom Spulenausgang A der ersten Spulengruppe 5.1 in einem schlaufenförmigen Drahtübergang 16 zum Spuleneingang E der zweiten Spulengruppe 5.2 geführt. In dem in der Fig. 4 gezeigten schlaufenförmigen Drahtübergang 16 ist der Wickeldraht 15 zunächst vom Spulenausgang A der ersten Spulengruppe 5.1 radial nach außen um den ersten Wickelpfosten W1 sowie in Umfangsrichtung radial außerhalb des Wickelpfostens W8 bis zu einem Wickelpfosten W9 und wieder zurück zum ersten Wickelpfosten W1. Von dort wird der Wickeldraht 15 radial nach innen zum Spuleneingang E der in der Umfangsrichtung benachbarten zweiten Spulengruppe 5.2 geführt, in der eine Anzahl von Spulenwindungen gewickelt werden.

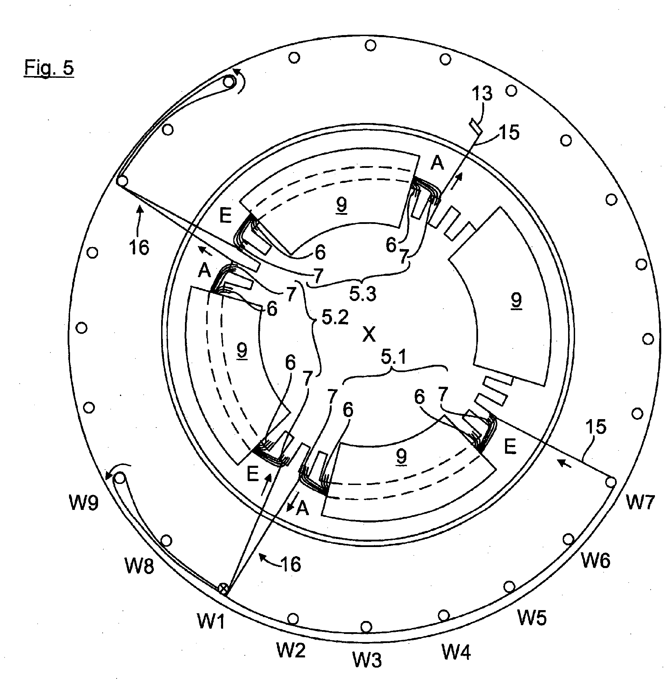

In einem folgenden dritten Wickelschritt (Fig. 5) wird der Wickeldraht 15 aus dem Spulenausgang A der zweiten Spulengruppe 5.2 in einem weiteren schlaufenartigen Drahtübergang 16 bis zum Spuleneingang E der dritten Spulengruppe 5.3 geführt, in der eine Anzahl von Spulenwindungen gewickelt wird.

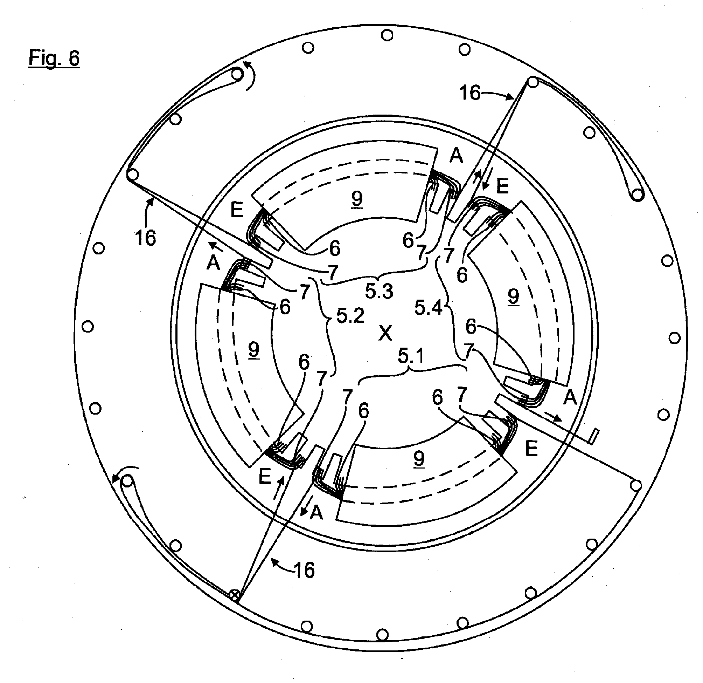

Dann wird in einem vierten Wickelschritt (Fig. 6) der Wickeldraht 15 aus dem Spulenausgang A der dritten Spulengruppe 5.3 in einem schlaufenartigen Drahtübergang 16 bis zum Spuleneingang E der vierten Spulengruppe 5.4 geführt, in der ebenfalls eine Anzahl von Spulenwindungen gewickelt wird. Nach erfolgter Ablage der Spulenwindungen in der vierten Spulengruppe 5.4 wird der Wickeldraht 15 ohne Drahtunterbrechung aus dem Spulenausgang A der vierten Spulengruppe 5.4 wieder in die ersten Spulengruppe 5.1 geführt, in der weitere Spulenwindungen abgelegt werden.

Die oben skizzierten ersten bis vierten Wickelschritte werden ohne Drahtunterbrechung bis zu einem Wickelprozessende (Fig. 7) wiederholt, in dem jede der Spulengruppen 5.1 bis 5.4 eine vorgegebene Anzahl von Spulenwindungen aufweist.

Das in den Fig. 2 bis 7 veranschaulichte Wickelschema wird in gleicher Weise auch bei der Wicklung der Phase v (Prozessschritt 10 in der Fig. 1b) und bei der Wicklung der Phase w (Prozessschritt 16 in der Fig. 1b) angewendet.

Nachdem die drei Phasen u, v, w gewickelt sind erfolgt der Auftrennschritt 21 (Fig. 1b), um die Spulenenden 21 der Spulengruppen zu erhalten. Der Auftrennschritt 21 ist in der Fig. 8 aus Gründen der Übersichtlichkeit nur bei eingezeichneter Phase u gezeigt, während die Wicklungen der Phasen v und w weggelassen sind. Demzufolge werden in der Fig. 8 mittels Schneidwerkzeuge 29 die Drahtbündel an den jeweiligen schlaufenartigen Drahtübergängen 16 zwischen den Spulenausgängen A und den Spuleneingängen E benachbarter Spulengruppen 5.1 bis 5.4 unter Bildung der Spulenenden 21 aufgetrennt.

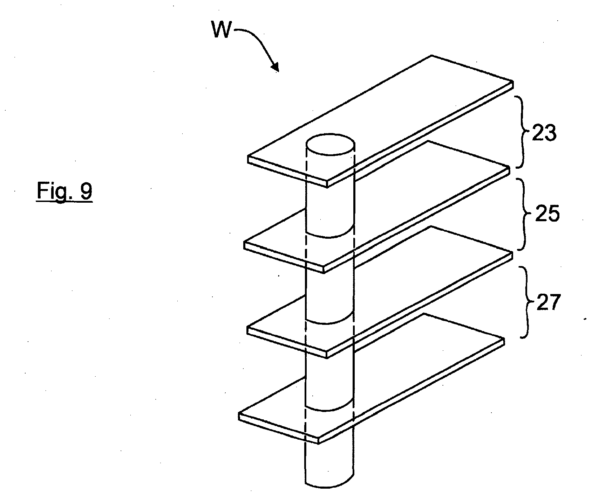

In der Fig. 9 ist ein Ausführungsbeispiel eines Wickelpfostens W gezeigt. Dieser weist für jede Phase u, v, w eine eigene Drahtführung 23, 25, 27 auf, mittels der die Wickeldrähte 15 der jeweiligen Phasen u, v, w voneinander separierbar sind.

## Patentansprüche

1. Verfahren zum Bewickeln eines Wicklungsträgers (2), insbesondere eines Stators einer Elektromaschine (1), unter Anwendung der Nadelwickeltechnik, welcher Wicklungsträger (2) in einer Umfangsrichtung abwechselnd Zähne und Nuten (4) aufweist und im bewickelten Zustand je Phase (u, v, w) zumindest zwei in Umfangsrichtung zueinander versetzte Spulengruppen (5.1 bis 5.4) aufweist, von denen jede Spulengruppe zumindest eine Spule (6, 7) mit Spulenwindungen aufweist, in welchem Verfahren ein Wickeldraht (15) unter Drahtspannung aus einer Wickelnadel (13) austritt und nach einem vorgegebenen Wickelschema (Fig. 2 bis 7) im Wicklungsträger (2) abgelegt wird, und zwar unter Bildung der Spulen (6, 7), deren Spulenenden (21) in einem Verschaltungsprozess nach einem vorgegebenen Verschaltungsschema miteinander elektrisch verbunden werden, wobei das Wickelschema so ausgelegt ist, dass die Spulengruppen (5.1 bis 5.4) einer jeden Phase (u, v, w) ohne Drahtunterbrechung mit dem Wickeldraht (15) in der Umfangsrichtung kontinuierlich gewickelt werden, und wobei in einem Auftrennschritt am Wickelprozessende das Drahtbündel am jeweiligen Drahtübergang (16) zwischen einem Spulenausgang (A) einer Spulengruppe und einem Spuleneingang (E) einer benachbarten Spulengruppe aufgetrennt wird, und zwar unter Bildung der Spulenenden (21), wobei zur Ausführung des Wickelschemas Wickelpfosten (W) vorgesehen sind, die mit einem Radialabstand radial außerhalb der Längsnuten (4) angeordnet sind, **dadurch gekennzeichnet, dass** zur Bildung des Drahtübergangs (16) der Wickeldraht (15) vom Spulenausgang (A) einer in der Umfangsrichtung vorgelagerten Spulengruppe schlaufenartig radial nach außen um zumindest einen ersten Wickelpfosten (W1) geführt wird und anschließend radial nach innen zum Spuleneingang (E) einer benachbarten, in der Umfangsrichtung nachgelagerten Spulengruppe geführt wird, und dass zur Steigerung der Schlaufenlänge des Drahtübergangs (16) der radial nach außen um den ersten Wickelpfosten (W1) geführte Wickeldraht (15) in Umfangsrichtung um zumindest einen zweiten Wickelpfosten (W8, W9) geführt wird und anschließend vorbei am ersten Wickelpfosten (W1) zum Spuleneingang (E) der benachbarten, in der Umfangsrichtung nachgelagerten Spulengruppe rückgeführt wird.

2. Verfahren nach Anspruch 1, **dadurch gekennzeichnet, dass** zu einem Wickelprozessbeginn der Wickeldraht (15) an einer Anbindungsstelle (W1) fixiert wird und in einem ersten Prozessschritt unter Bildung von Spulenwindungen in den, der ersten Spulengruppe (5.1) zugeordneten Längsnuten (4) abgelegt wird.

3. Verfahren nach Anspruch 2, **dadurch gekennzeichnet, dass** in einem folgenden zweiten Prozessschritt der Wickeldraht (15) aus dem Spulenausgang (A) der ersten Spulengruppe (5.1) geführt wird und ohne Drahtunterbrechung unter Bildung von Spulenwindungen in den, der zweiten Spulengruppe (5.2) zugeordneten Längsnuten (4) abgelegt wird.

4. Verfahren nach Anspruch 3, **dadurch gekennzeichnet, dass** in einem folgenden dritten Prozessschritt der Wickeldraht (15) aus dem Spulenausgang (A) der zweiten Spulengruppe (5.2) geführt wird und ohne Drahtunterbrechung unter Bildung weiterer Spulenwindungen in der in Umfangsrichtung anschließenden Spulengruppe abgelegt wird.

5. Verfahren nach Anspruch 3 oder 4, **dadurch gekennzeichnet, dass** bei mehr als zwei Spulengruppen (5.1, 5.2, 5.3, 5.4) je Phase (u, v, w) dem zweiten Prozessschritt zumindest ein weiterer Prozessschritt nachgeschaltet ist, bei dem der Wickeldraht (15) aus dem Spulenausgang (A) der zweiten Spulengruppe (5.2) geführt wird und ohne Drahtunterbrechung unter Bildung von Spulenwindungen in der zumindest einen folgenden Spulengruppe (5.3, 5.4) abgelegt wird, und dass in einem letzten Prozessschritt der Wickeldraht (15) aus dem Spulenausgang (A) der in Umfangsrichtung letzten, zu bewickelnden Spulengruppe (5.4) geführt wird und ohne Drahtunterbrechung unter Bildung weiterer Spulenwindungen in der in Umfangsrichtung anschließenden ersten Spulengruppe (5.1) abgelegt wird.

6. Verfahren nach Anspruch 5, **dadurch gekennzeichnet, dass** die ersten bis letzten Prozessschritte ohne Drahtunterbrechung wiederholt werden, bis jede Spulengruppe (5.1 bis 5.4) eine vorgegebene Anzahl von Spulenwindungen aufweist.

7. Verfahren nach einem der vorhergehenden Ansprüche, **dadurch gekennzeichnet, dass** die Wickelpfosten (W) in der Umfangsrichtung gleichmäßig umfangsverteilt angeordnet sind.

8. Verfahren nach einem der vorhergehenden Ansprüche, **dadurch gekennzeichnet, dass** der Auftrennschritt nach der Fertigstellung sämtlicher Spulengruppen aller drei Phasen (u, v, w) erfolgt.

9. Verfahren nach einem der vorhergehenden Ansprüche, **dadurch gekennzeichnet, dass** nach der Fertigstellung der Spulengruppen (5.1 bis 5.4) der jeweiligen Phase (u, v, w) ein Pressenschritt erfolgt, in dem die stirnseitigen Spulenköpfe (14) der Spulengruppen (5.1 bis 5.4) gegen die Wicklungsträger-Stirnseite (8) gepresst werden, und dass anschließend die Spulenköpfe (14) mit einer Phasenisolation überdeckt werden.

10. Verfahren nach einem der vorhergehenden Ansprüche, **dadurch gekennzeichnet, dass** nach der Fertigstellung der Spulengruppen (5.1 bis 5.4) mit Hilfe eines Deckschieberwerkzeugs die Längsnuten-Schlitze mit Deckschiebern (12) geschlossen werden.

11. Verfahren nach einem der Ansprüche 7 bis 10, **dadurch gekennzeichnet, dass** die Wickelpfosten (W) für jede Phase (u, v, w) eine Drahtführung (23, 25, 27) aufweist, mittels der die Wickeldrähte (15) der jeweiligen Phasen (u, v, w) voneinander separiert sind.

## Claims

1. Method for winding a winding support (2), more particularly of a stator of an electric machine (1), using the needle-winding technique, which winding support (2) has teeth and slots (4) alternately in a circumferential direction and, in the wound state, has per phase (u, v, w) at least two coil groups (5.1 to 5.4) offset in relation to each other in circumferential direction, each of these coil groups having at least one coil (6, 7) with coil windings, in which method a winding wire (15) under wire tension comes out of a winding needle (13) and is deposited in the winding support (2) in accordance with a predefined winding pattern (Fig. 2 to 7), and specifically with the formation of coils (6, 7), the coil ends (21) of which are connected to each other electrically in an interconnection process in accordance with a predefined interconnection pattern, wherein the winding pattern is designed such that the coil groups (5.1 to 5.4) of each and every phase (u, v, w) are wound continuously with the winding wire (15) in the circumferential direction, without any break in the wire, and wherein in a separation step at the end of the winding process the wire bundle is separated at the particular wire transition (16) between a coil exit (A) of one coil group and a coil entry (E) of an adjacent coil group, and specifically with the formation of coil ends (21), wherein, for the execution of the winding pattern, winding posts (W) are provided, which are arranged radially outside the longitudinal slots (4) with a radial gap, **characterised in that,** for the formation of the wire transition (16), the winding wire (15) is passed from the coil exit (A) of an upstream coil group in the circumferential direction in a loop-like manner radially outwards around at least a first winding post (W1) and then radially inwards to the coil entry (E) of an adjacent downstream coil group in the circumferential direction, and that, to increase the loop length of the wire transition (16), the winding wire (15) passed radially outwards around the first winding post (W1) is passed in circumferential direction around at least a second winding post (W8, W9) and then passed back past the first winding post (W1) to the coil entry (E) of the adjacent downstream coil group in the circumferential direction.

2. Method according to claim 1, **characterised in that** at the start of a winding process the winding wire (15) is fixed to an attachment point (W1) and in a first process step is deposited in the longitudinal slots (4) assigned to the first coil group (5.1) with the formation of coil windings.

3. Method according to claim 2, **characterised in that** in a following second process step the winding wire (15) is passed out of the coil exit (A) of the first coil group (5.1) and is deposited in the longitudinal slots (4) assigned to the second coil group (5.2), without any break in the wire, with the formation of coil windings.

4. Method according to claim 3, **characterised in that** in a following third process step the winding wire (15) is passed out of the coil exit (A) of the second coil group (5.2) and is deposited in the following coil group in circumferential direction, without any break in the wire, with the formation of further coil windings.

5. Method according to claim 3 or 4, **characterised in that,** if there are more than two coil groups (5.1, 5.2, 5.3, 5.4) per phase (u, v, w) the second process step is followed by at least one further process step, in which the winding wire (15) is passed out of the coil exit (A) of the second coil group (5.2) and is deposited in the at least one following coil group (5.3, 5.4), without any break in the wire, with the formation of coil windings, and that in a last process step the winding wire (15) is passed out of the coil exit (A) of the last coil group (5.4) to be wound in circumferential direction and is deposited in the following first coil group (5.1) in circumferential direction, without any break in the wire, with the formation of further coil windings.

6. Method according to claim 5, **characterised in that** the first to last process steps are repeated, without any break in the wire, until each coil group (5.1 to 5.4) has a predefined number of coil windings.

7. Method according to any one of the preceding claims, **characterised in that** the winding posts (W) are arranged evenly spaced out around the circumference in the circumferential direction.

8. Method according to any one of the preceding claims, **characterised in that** the separation step takes place after the completion of all the coil groups of all three phases (u, v, w).

9. Method according to any one of the preceding claims, **characterised in that** after the completion of the coil groups (5.1 to 5.4) of the particular phase (u, v, w) a pressing step takes place, in which the face-side coil ends (14) of the coil groups (5.1 to 5.4) are pressed against the winding support face side (8), and that then the coil ends (14) are covered with a phase insulation.

10. Method according to any one of the preceding claims, **characterised in that** after the completion of the coil groups (5.1 to 5.4) the longitudinal slots are closed with caps (12) with the help of a capping tool.

11. Method according to any one of the preceding claims 7 to 10, **characterised in that** the winding posts (W) for each phase (u, v, w) have a wire guide (23, 25, 27), by means of which the winding wires (15) of the respective phases (u, v, w) are separated from each other.

## Revendications

1. Procédé pour embobiner un support d'enroulement (2), en particulier un stator d'une machine électrique (1), en utilisant la technique de l'enroulement à aiguilles, lequel support d'enroulement (2) comporte des dents et des rainures (4) en alternance dans une direction circonférentielle et comporte à l'état embobiné, par phase (u, v, w), au moins deux groupes de bobines (5.1 à 5.4) décalés les uns par rapport aux autres dans la direction circonférentielle, chaque groupe de bobines comportant au moins une bobine (6, 7) avec des spires de bobine,
procédé dans lequel un fil d'enroulement (15) sort d'une aiguille d'enroulement (13) avec une certaine tension de fil et est déposé dans le support d'enroulement (2) suivant un schéma d'enroulement prédéterminé (figures 2 à 7), et ce en formant les bobines (6, 7) dont les extrémités de bobine (21) sont reliées électriquement entre elles dans un processus de branchement suivant un schéma de branchement prédéterminé,
dans lequel le schéma d'enroulement est conçu de telle sorte que les groupes de bobines (5.1 à 5.4) de chaque phase (u, v, w) sont enroulés en continu dans la direction circonférentielle sans interruption de fil avec le fil d'enroulement (15)
et dans lequel, dans une étape de séparation à la fin du processus d'enroulement, le faisceau de fils est séparé au niveau de la transition de fils (16) respective entre une sortie de fil (A) d'un groupe de bobines et une entrée de fil (E) d'un groupe de bobines voisin, et ce en formant les extrémités de bobine (21), des piquets d'enroulement (W) agencés à une certaine distance radiale à l'extérieur des rainures longitudinales (4) étant prévus dans le but de réaliser le schéma d'enroulement,
**caractérisé en ce que,** pour former la transition de fils (16), le fil d'enroulement (15) est guidé à partir de la sortie de bobine (A) d'un groupe de bobine placé en amont dans la direction circonférentielle, en boucle de façon radiale vers l'extérieur, autour d'au moins un premier piquet d'enroulement (W1) et est ensuite guidé de façon radiale vers l'intérieur jusqu'à l'entrée de bobine (E) d'un groupe de bobines voisin placé en aval dans la direction circonférentielle
et **en ce que**, pour augmenter la longueur de boucle de la transition de fils (16), le fil d'enroulement (15) guidé de façon radiale vers l'extérieur autour du premier piquet d'enroulement (W1) est guidé dans la direction circonférentielle autour d'au moins un deuxième piquet d'enroulement (W8, W9) et est ensuite guidé en retour devant le premier piquet d'enroulement (W1) jusqu'à l'entrée de bobine (E) du groupe de bobines voisin placé en aval dans la direction circonférentielle.

2. Procédé selon la revendication 1, **caractérisé en ce que,** au début d'un processus d'enroulement, le fil d'enroulement (15) est fixé à un point d'attache (W1) et, dans une première étape de processus, il est déposé dans les rainures longitudinales (4) associées au premier groupe de bobines (5.1) de manière à former des spires de bobine.

3. Procédé selon la revendication 2, **caractérisé en ce que,** dans une étape suivante, la deuxième, du processus, le fil d'enroulement (15) est guidé hors de la sortie de bobine (A) du premier groupe de bobines (5.1) et est déposé, sans interruption de fil, dans les rainures longitudinales (4) associées au deuxième groupe de bobines (5.2) de manière à former des spires de bobine.

4. Procédé selon la revendication 3, **caractérisé en ce que,** dans une étape suivante, la troisième, du processus, le fil d'enroulement (15) est guidé hors de la sortie de bobine (A) du deuxième groupe de bobines (5.2) et est déposé, sans interruption de fil, dans le groupe de bobines suivant en direction circonférentielle de manière à former d'autres spires de bobine.

5. Procédé selon la revendication 3 ou 4, **caractérisé en ce que,** en présence de plus de deux groupes de bobines (5.1, 5.2, 5.3, 5.4), pour chaque phase (u, v, w), il est prévu à la suite de la deuxième étape de processus au moins une autre étape de processus lors de laquelle le fil d'enroulement (15) est guidé hors de la sortie de bobine (A) du deuxième groupe de bobines (5.2) et est déposé, sans interruption de fil, dans l'au moins un groupe de bobines suivant (5.3, 5.4) de manière à former des spires de bobine, et **en ce que**, dans une dernière étape de processus, le fil d'enroulement (15) est guidé hors de la sortie de bobine (A) du dernier, en direction circonférentielle, groupe de bobines (5.4) à enrouler et
est déposé, sans interruption de fil, dans le premier groupe de bobines (5.1), le suivant en direction circonférentielle, de manière à former d'autres spires de bobine.

6. Procédé selon la revendication 5, **caractérisé en ce que** les première à dernière étapes de processus sont répétées sans interruption de fil jusqu'à ce que chaque groupe de bobines (5.1 à 5.4) comporte un nombre prédéterminé de spires de bobine.

7. Procédé selon l'une quelconque des revendications précédentes, **caractérisé en ce que** les piquets d'enroulement (W) sont agencés de manière répartie régulièrement dans la direction circonférentielle.

8. Procédé selon l'une quelconque des revendications précédentes, **caractérisé en ce que** l'étape de séparation s'effectue après la réalisation de tous les groupes de bobines de l'ensemble des trois phases (u, v, w).

9. Procédé selon l'une quelconque des revendications précédentes, **caractérisé en ce que,** après la réalisation des groupes de bobines (5.1 à 5.4) de la phase (u, v, w) respective, on effectue une étape de pressage dans laquelle les têtes de bobine frontales (14) des groupes de bobines (5.1 à 5.4) sont pressées contre le côté frontal de support d'enroulement (8) et **en ce que**, ensuite, les têtes de bobine (14) sont recouvertes d'un isolant de phase.

10. Procédé selon l'une quelconque des revendications précédentes, **caractérisé en ce que,** après la réalisation des groupes de bobines (5.1 à 5.4), les fentes de rainures longitudinales sont fermées avec des glissières couvrantes (12) à l'aide d'un outil à glissières.

11. Procédé selon l'une quelconque des revendications 7 à 10, **caractérisé en ce que** les piquets d'enroulement (W) comportent pour chaque phase (u, v, w) un guide-fil (23, 25, 27) au moyen duquel les fils d'enroulement (15) des phases (u, v, w) sont séparés les uns des autres.
